(19) Europäisches Patentamt
European Patent Office
Office européen des brevets

(11) Publication number: **0 453 309 B1**

(12) # EUROPEAN PATENT SPECIFICATION

(45) Date of publication of patent specification: **30.08.95**

(51) Int. Cl.$^6$: **C09K 19/46**

(21) Application number: **91303543.2**

(22) Date of filing: **19.04.91**

(54) **Ferroelectric liquid crystal composition.**

(30) Priority: **20.04.90 JP 102815/90**

(43) Date of publication of application:
**23.10.91 Bulletin 91/43**

(45) Publication of the grant of the patent:
**30.08.95 Bulletin 95/35**

(84) Designated Contracting States:
**CH DE FR GB LI SE**

(56) References cited:
**EP-A- 0 156 726**
**EP-A- 0 315 455**
**EP-A- 0 322 793**
**EP-A- 0 325 228**

(73) Proprietor: **Chisso Corporation**
**6-32, Nakanoshima 3-chome**
**Kita-ku**
**Osaka-shi**
**Osaka-fu (JP)**

(72) Inventor: **Katsuyuki, Murashiro**
**17, Tatsumidaihigasi 2-chome**
**Ichihara-shi,**
**Chiba-ken (JP)**
Inventor: **Kikuchi, Makoto**
**1708-7, Johzai**
**Kisarazu-shi,**
**Chiba-ken (JP)**
Inventor: **Terashima, Kanetsugu**
**8890, Goi**
**Ichihara-shi,**
**Chiba-ken (JP)**

(74) Representative: **Lamb, John Baxter et al**
**MARKS & CLERK,**
**57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a ferroelectric liquid crystal composition. More specifically, it relates to a ferroelectric liquid crystal composition containing a non-chiral compound with a negative dielectric anisotropy and having the negative dielectric anisotropy and excellent temperature properties of a response speed, and it also relates a light switching element in which this composition is used.

In recent years, liquid crystal displays have been widely used as display elements by the utilization of features such as thinness, lightweight and less consumption of electric power. However, most of these liquid crystal displays utilize a TN display mode in which a liquid crystal material having a nematic phase is used, and the response of these displays is still slow in application fields in which a high multiplexity is required. Therefore, the improvement of these kinds of liquid crystal displays is driven by necessity.

In such situations, much attention is nowadays paid to a display system utilizing the light switching phenomenon of ferroelectric liquid crystals which has been suggested by N. A. Clark and S. T. Lagerwall [refer to Appl. Phys. Lett., Vol. 36, p. 899 (1980)]. The existence of the ferroelectric liquid crystals has been reported for the first time by R. B. Meyer et al. in 1975 [refer to J. de Phys., Vol. 36, p. 69 (1975)], and according to the classification of the liquid crystals, these ferroelectric liquid crystals belong to a chiral smectic C phase, chiral smectic I phase, chiral smectic F phase, chiral smectic G phase, chiral semctic H phase, chiral smectic J phase and chiral smectic K phase (hereinafter abbreviated to an $S_C$* phase, $S_I$* phase, $S_F$* phase, $S_G$* phase, $S_H$* phase, $S_J$* phase and $S_K$* phase, respectively).

In case that the light switching effect of the ferroelectric liquid crystals is applied to the display element, this kind of display element has two more excellent features, as compared with the TN display mode. The first feature is that the response is so quick that the response time is 1/100 or less of that of the TN display mode, and the second feature is that a memory effect is present and multiplex drive is easy in association with the above-mentioned high-speed response properties.

As means for giving the memory properties to the display element using the ferroelectric liquid crystals, the following two methods can be contrived.

The first method comprises decreasing the thickness (d) of a cell to the pitch (p) or less of a helix (d<p), and then unwinding the helix to generate the memory properties, which has been suggested by N. A. Clark [refer to Appl. Phys. Lett., Vol. 36, p. 899 (1980)]. In order to generate the memory properties by this method, it is necessary to maintain the thickness of the cell at a level of from about 1 to about 3 μm, since most materials of the ferroelectric liquid crystals which are now used have the short helical pitch (1 to 3 μm). However, the utilization of this method is undesirable in view of the current manufacturing technique of the cells, i.e., from the viewpoints of cost and yield.

The above-mentioned second method is to utilize an AC stabilizing effect so as to generate the memory properties, and it has been discovered by Le Piesant et al. [refer to Paris Liquid Crystal Conference, p. 217 (1984)].

This method is effective only for the materials of the ferroelectric liquid crystals having a negative dielectric anisotropy ($\Delta\epsilon$). A liquid crystal molecule in which the dielectric anisotropy is negative ($\Delta\epsilon<0$) has characteristics for taking a parallel state to a substrate, when an electric field is applied. In case that the low-frequency electric field is intermittently applied, the effect of spontaneous polarization works predominantly, and the polarity of the electric field inverses, with the result that switching is carried out. In this case, in the condition that the electric field is not applied, the molecule falls off from the parallel state to the substrate (i.e., memory properties are lost), and contrast deteriorates. However, when the high-frequency electric field is continuously superimposed simultaneously on the intermittent application of the low-frequency electric field, in the condition that the low-frequency electric field is not applied, the effect of the spontaneous polarization cannot follow the high-frequency electric field, so that the effect of the dielectric anisotropy is predominant. In consequence, the molecule maintains the parallel state to the substrate (i.e., memory properties are generated), whereby the high contrast is obtained.

The AC stabilizing effect can be exerted by utilizing characteristics generated at the time when the high-frequency electric field is applied to the above-mentioned liquid crystals having the negative dielectric anisotropy, and according to this AC stabilizing effect, the memory properties can be generated even in the thick cells (5 to 7 μm). For the reason, the second method can utilize the current cell manufacturing technique and is more practical than the first method.

In fact, matrix displays utilizing this AC stabilizing effect have been reported for the first time in 1985 by Jeary [refer to SID '85, Digest p. 128 (1985)], and afterward, examples regarding this technique have scarcely been reported. This reason is that the materials for ferroelectric liquid crystals having the negative dielectric anisotropy are small. Furthermore, the Jeary's report describes that in order to generate the memory properties by the utilization of the AC stabilizing effect, a voltage of about 40 V is necessary.

Considering the drive voltage range of usual ICs, it is desirable to generate the AC stabilizing effect at a lower voltage (25 V or less).

The current birefringence mode ferroelectric liquid crystal elements cannot provide the memory properties sufficiently owing to the splay alignment of the molecule and the formation of the chevron structure, so that the contrast is low, which makes these liquid crystal elements impractical. Therefore, even in the case of the thin cells (1 to 3 μm), the utilization of the AC stabilizing effect is required, and the materials for the liquid crystals which can meet this requirement are desired.

With regard to the materials for the ferroelectric liquid crystals which have been reported by the Jeary, a response time is several msec., which is still slow from a practical viewpoint. The ferroelectric liquid crystal compositions are disclosed in Japanese Patent Application Laid-open No. 1-168792 and 1-306493, but the temperature change of the response time is too large to be practical. Hence, it is demanded to develop the ferroelectric liquid crystals having a high-speed response, the excellent temperature properties of the response time and the negative dielectric anisotropy.

## SUMMARY OF THE INVENTION

The first object of the present invention is to provide a ferroelectric liquid crystal composition having a negative dielectric anisotropy, an AC stabilizing effect even at a low voltage, a high-speed response and the excellent temperature properties of a response time, and the second object of the present invention is to provide a light switching element in which this composition is used.

The ferroelectric liquid crystal composition of the present invention is characterized by having a negative dielectric anisotropy and by the content of the following three components A, B and C being 85% or more of the composition, ratios of the components A, B and C to the total weight of the three components being 10-25% by weight, 45-65% by weight and 10-30% by weight, respectively,

the component A being composed of one or more compourds represented by the formula

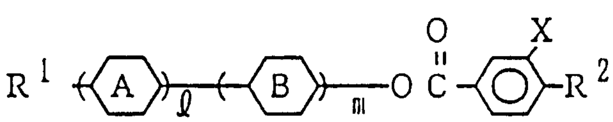

(A)

the component B being composed of one or more compounds represented by the formula

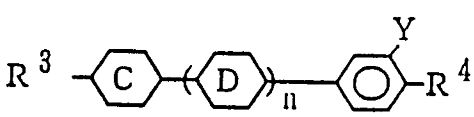

(B)

and the component C being composed of one or more compounds selected from compounds represented by the formulae

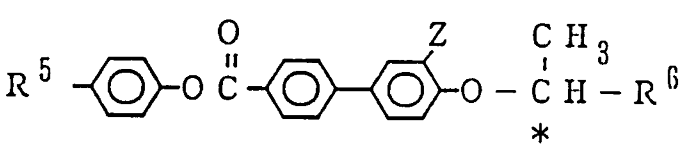

(C - 1)

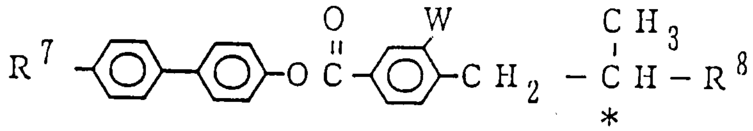

(C − 2)

and

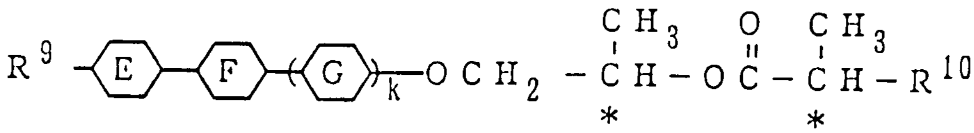

(C − 3)

wherein $R^1$ and $R^2$ are identical or different and each of these groups is a straight-chain alkyl group or alkoxy group having 1 to 18 carbon atoms, $R^3$, $R^4$, $R^5$, $R^7$ and $R^9$ are identical or different and each of these groups is a straight-chain or branched alkyl group or alkoxy group having 1 to 18 carbon atoms, each of $R^6$ and $R^8$ is a straight-chain or branched alkyl group having 2 to 18 carbon atoms, $R^{10}$ is a straight-chain or branched alkyl group having 2 to 18 carbon atoms or a straight-chain or branched alkoxy group having 1 to 18 carbon atoms, each of $\ell$, m, n and k is 0 or 1, $\ell + m$ is 1 or 2, each of

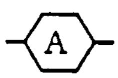 , 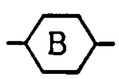 , 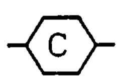 , 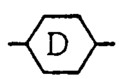 , 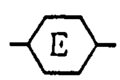 , 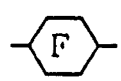 and 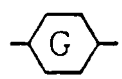

is independently

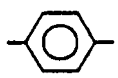 , 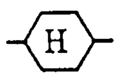 , 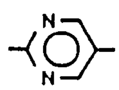 , 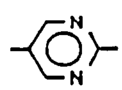 , 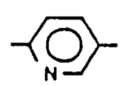 ,

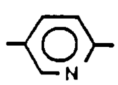 , 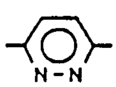 or 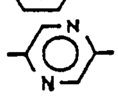 ,

each of X, Y, Z and W is F, Cl, Br or CN and Y may also be H, and * indicates an asymmetric carbon atom.

## BRIEF DESCRIPTION OF THE DRAWINGS

Fig. 1 shows a temperature change to the response time of a liquid crystal composition of the present invention in Example 1 and a liquid crystal composition in Comparative Example 1,
Fig. 2 shows a waveform of applied voltage of the composition regarding the present invention, and
Fig. 3 shows an optical response in case that an AC waveform in $25KH_z$ is superposed upon the voltage waveform shown in Fig. 2.

## DETAILED DESCRIPTION OF PREFERRED EMBODIMENTS

A component A of a liquid crystal composition regarding the present invention is a non-chiral compound represented by the formula (A). This compound has a negative dielectric anisotropy and is rich in smectic C properties, and therefore it plays the role of a base $S_C$ compound (which role is to exhibit $S_C$ in a wide temperature range) in the liquid crystal composition of the present invention.

In the compound of the component A represented by the formula (A), $R^1$ and $R^2$ are identical or different and each of these groups is a straight-chain alkyl group or alkoxy group having 1 to 18 carbon atoms, preferably 1 to 10 carbon atoms, more preferably 4 to 10 carbon atoms.

One typical example of the compound represented by the formula (A) is a compound represented by the formula

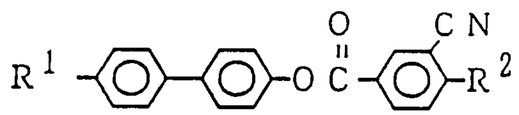

(A − 1)

wherein each carbon number of $R^1$ and $R^2$ is the same as mentioned above, and the particularly preferable carbon number is from 4 to 10. Table 1 shows typical examples of $R^1$ and $R^2$.

**Table 1 Compounds represented by**

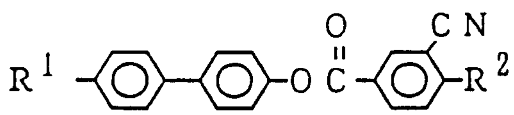

| $R^1$ | $R^2$ | $R^1$ | $R^2$ |
|---|---|---|---|
| $C_5H_{11}$- | $-C_7H_{15}$ | $C_8H_{17}$- | $-C_8H_{17}$ |
| $C_6H_{13}$- | $-C_7H_{15}$ | $C_9H_{19}$- | $-C_8H_{17}$ |
| $C_7H_{15}$- | $-C_7H_{15}$ | $C_5H_{11}$- | $-C_9H_{19}$ |
| $C_8H_{17}$- | $-C_7H_{15}$ | $C_6H_{13}$- | $-C_9H_{19}$ |
| $C_9H_{19}$- | $-C_7H_{15}$ | $C_7H_{15}$- | $-C_9H_{19}$ |
| $C_5H_{11}$- | $-C_8H_{17}$ | $C_8H_{17}$- | $-C_9H_{19}$ |
| $C_6H_{13}$- | $-C_8H_{17}$ | $C_9H_{19}$- | $-C_9H_{19}$ |
| $C_7H_{15}$- | $-C_8H_{17}$ | | |

The compound represented by the formula (A-1) exhibits an $S_C$ phase in a relatively high temperature range and has a negative dielectric anisotropy. For example, a compound represented by the formula

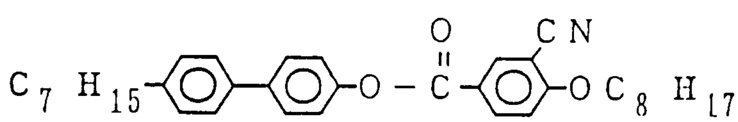

has a phase transition temperature of Cr83.6 $S_C$138.6 $S_A$158.0 $I_{SO}$ and a dielectric anisotropy $\Delta\epsilon$ of -7.

In the component B of the liquid crystal composition of the present invention, there are a chiral compound having chiral smectic C properties in which $R^4$ of the formula (B) is an optically active group and a non-chiral compound rich in smectic C properties.

Typical examples of the non-chiral compound represented by the formula (B) are

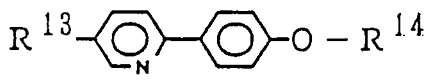 (B - 1)

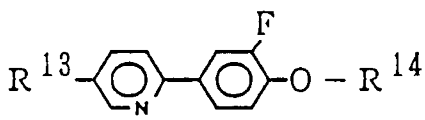 (B - 2)

and typical examples of the chiral compound represented by the formula (B) are

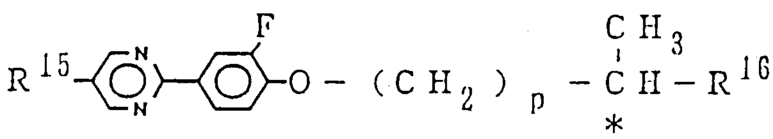 (B - 3)

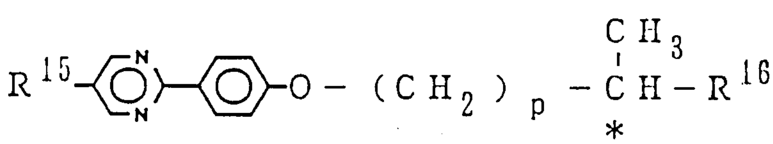 (B - 4)

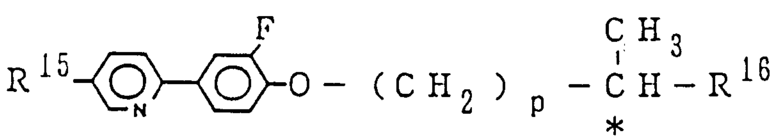 (B - 5)

and

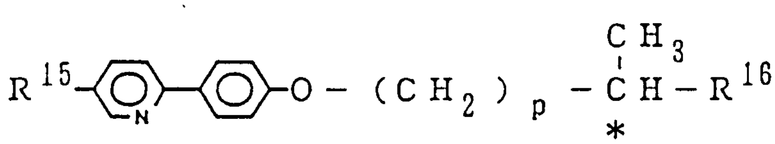 (B - 6)

wherein $R^{13}$ and $R^{14}$ are identical or different and each of these groups is a straight-chain alkyl group having 1 to 18 carbon atoms, $R^{15}$ is a straight-chain alkyl group or alkoxy group having 1 to 18 carbon atoms, $R^{16}$ is an alkyl group having 2 to (16-p) carbon atoms, p is an integer of from 0 to 10, and * indicates an asymmetric carbon atom. Furthermore, it is more preferable that $R^{13}$ is a straight-chain alkyl group having 6 to 12 carbon atoms, $R^{14}$ is a straight-chain alkyl group having 3 to 13 carbon atoms, $R^{15}$ is a straight-chain alkyl group having 5 to 13 carbon atoms, and $R^{16}$ is a straight-chain alkyl group having 2 carbon atoms.

Since in the chiral compounds represented by the above-mentioned formulae (B-3), (B-4), (B-5) and (B-6), spontaneous polarization is nominal, these chiral compounds, like the non-chiral compounds, can play the role as each base compound of the liquid crystal composition of the present invention. Typical examples of $R^{13}$ and $R^{14}$ are set forth in Tables 2 and 3, and typical examples of $R^{15}$ and $R^{16}$ are set forth in Tables 4 and 5.

Table 2 Compounds (B-1) represented by

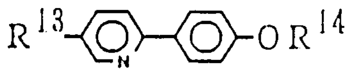

| $R^{13}$ | $OR^{14}$ | $R^{13}$ | $OR^{14}$ |
|---|---|---|---|
| $C_7H_{15}-$ | $-OC_4H_9$ | $C_9H_{19}-$ | $-OC_5H_{11}$ |
| $C_7H_{15}-$ | $-OC_5H_{11}$ | $C_9H_{19}-$ | $-OC_6H_{13}$ |
| $C_7H_{15}-$ | $-OC_6H_{13}$ | $C_9H_{19}-$ | $-OC_7H_{15}$ |
| $C_7H_{15}-$ | $-OC_7H_{15}$ | $C_9H_{19}-$ | $-OC_8H_{17}$ |
| $C_7H_{15}-$ | $-OC_8H_{17}$ | $C_9H_{19}-$ | $-OC_9H_{19}$ |
| $C_7H_{15}-$ | $-OC_9H_{19}$ | $C_9H_{19}-$ | $-OC_{10}H_{21}$ |
| $C_7H_{15}-$ | $-OC_{10}H_{21}$ | $C_9H_{19}-$ | $-OC_{11}H_{23}$ |
| $C_7H_{15}-$ | $-OC_{11}H_{23}$ | $C_9H_{19}-$ | $-OC_{12}H_{25}$ |
| $C_7H_{15}-$ | $-OC_{12}H_{25}$ | $C_{10}H_{21}-$ | $-OC_5H_{11}$ |
| $C_8H_{17}-$ | $-OC_5H_{11}$ | $C_{10}H_{21}-$ | $-OC_6H_{13}$ |
| $C_8H_{17}-$ | $-OC_6H_{13}$ | $C_{10}H_{21}-$ | $-OC_7H_{15}$ |
| $C_8H_{17}-$ | $-OC_7H_{15}$ | $C_{10}H_{21}-$ | $-OC_8H_{17}$ |
| $C_8H_{17}-$ | $-OC_8H_{17}$ | $C_{10}H_{21}-$ | $-OC_9H_{19}$ |
| $C_8H_{17}-$ | $-OC_9H_{19}$ | $C_{10}H_{21}-$ | $-OC_{10}H_{21}$ |
| $C_8H_{17}-$ | $-OC_{10}H_{21}$ | $C_{10}H_{21}-$ | $-OC_{11}H_{23}$ |
| $C_8H_{17}-$ | $-OC_{11}H_{23}$ | $C_{10}H_{21}-$ | $-OC_{12}H_{25}$ |
| $C_8H_{17}-$ | $-OC_{12}H_{25}$ | | |

Table 3 Compounds (B-2) represented by

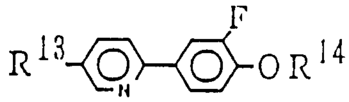

| $R^{13}$ | $OR^{14}$ | $R^{13}$ | $OR^{14}$ |
|---|---|---|---|
| $C_6H_{13}$- | $-OC_7H_{15}$ | $C_9H_{19}$- | $-OC_7H_{15}$ |
| $C_6H_{13}$- | $-OC_{10}H_{21}$ | $C_9H_{19}$- | $-OC_{12}H_{25}$ |
| $C_7H_{15}$- | $-OC_6H_{13}$ | $C_{10}H_{21}$- | $-OC_5H_{11}$ |
| $C_7H_{15}$- | $-OC_8H_{17}$ | $C_{10}H_{21}$- | $-OC_9H_{19}$ |
| $C_8H_{17}$- | $-OC_8H_{17}$ | $C_8H_{17}$- | $-OC_{11}H_{23}$ |

Table 4 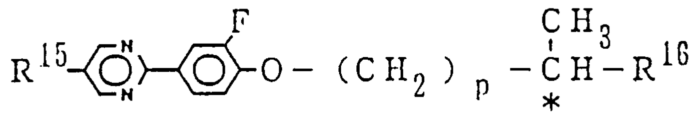 (B-3)

| $R^{15}$ | p | $R^{16}$ | $R^{15}$ | p | $R^{16}$ |
|---|---|---|---|---|---|
| $C_7H_{15}$- | 3 | $-C_2H_5$ | $C_{12}H_{25}$- | 4 | $-C_2H_5$ |
| $C_8H_{17}$- | 3 | " | $C_6H_{13}$- | 5 | " |
| $C_9H_{19}$- | 3 | " | $C_7H_{15}$- | 5 | " |
| $C_{12}H_{25}$- | 3 | " | $C_8H_{17}$- | 5 | " |
| $C_7H_{15}$- | 4 | " | $C_{12}H_{25}$- | 5 | " |
| $C_8H_{17}$- | 4 | " | $C_8H_{17}$- | 6 | " |
| $C_9H_{19}$- | 4 | " | $C_8H_{17}$- | 7 | " |

Table 5 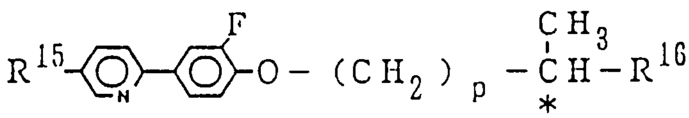 (B-5)

| $R^{15}$ | p | $R^{16}$ | $R^{15}$ | p | $R^{16}$ |
|---|---|---|---|---|---|
| $C_7H_{15}$- | 3 | $-C_2H_5$ | $C_9H_{19}$- | 7 | $-C_2H_5$ |
| $C_{10}H_{21}$- | 3 | " | $C_8H_{17}$- | 4 | " |
| $C_8H_{17}$- | 3 | " | $C_6H_{13}$- | 5 | " |
| $C_6H_{13}$- | 4 | " | $C_8H_{17}$- | 5 | " |
| $C_9H_{19}$- | 4 | " | | | |

The compounds represented by the formulae (B-1) to (B-6) exhibit an $S_C$ phase or an $S_C^*$ phase in a relatively low temperature range and have a negative dielectric anisotropy.

For example, a compound represented by the formula

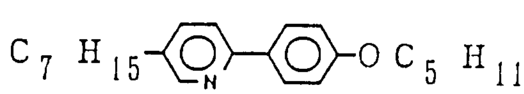

has a phase transition temperature of Cr26.5 $S_G$35 $S_F$48 $S_C$67.5 N68.7 $I_{SO}$ and a dielectric anisotropy $\Delta\epsilon$ of -1.

A compound represented by the formula

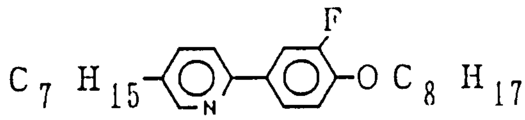

has a phase transition temperature of Cr26.0 $S_C$46.0 $S_A$53.4 $I_{SO}$ and a dielectric anisotropy $\Delta\epsilon$ of -2. Furthermore, a compound represented by the formula

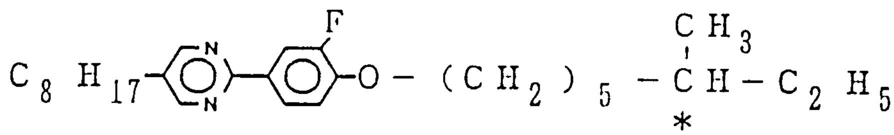

has a phase transition temperature of Cr10.0 $S_C$*33.2 $S_A$43.2 $I_{SO}$ and a dielectric anisotropy $\Delta\epsilon$ of -0.5.

In addition to the above-mentioned compounds, examples of compounds which are desirable as the component B are

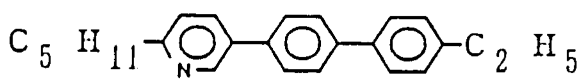

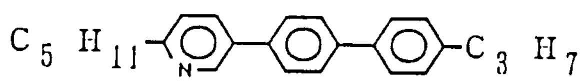

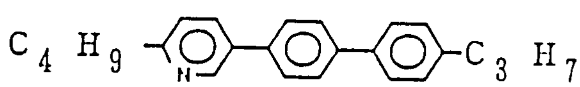

.

The component C in the liquid crystal composition of the present invention is composed of one or more chiral compounds represented by the following formulae (C-1) to (C-3), and this component C contributes to the increase of spontaneous polarization and the acceleration of the response speed of the composition:

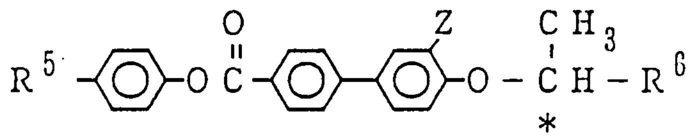 (C-1)

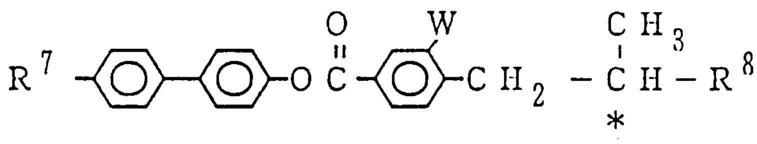 (C-2)

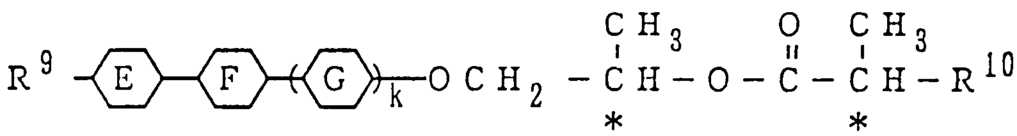

(C-3)

wherein $R^5$, $R^7$ and $R^9$ are identical or different and each of these groups is a straight-chain or branched alkyl group or alkoxy group having 1 to 18 carbon atoms, $R^6$ and $R^8$ are identical or different and each of these groups is a straight-chain or branched alkyl group having 2 to 18 carbon atoms, $R^{10}$ is a straight-chain or branched alkyl group having 2 to 18 carbon atoms or a straight-chain or branched alkoxy group having 1 to 18 carbon atoms, k is 0 or 1, each of

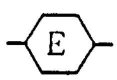, 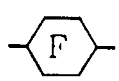 and 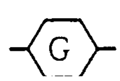

is independently

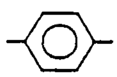, 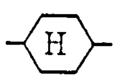, 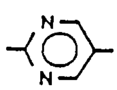, 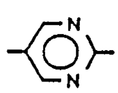, 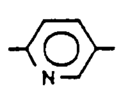, 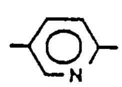, 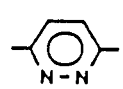 or 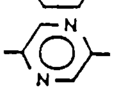.

Each of Z and W is F, Cl, Br or CN, and * indicates an asymmetric carbon atom.

Each of $R^5$, $R^6$, $R^7$, $R^8$, $R^9$ and $R^{10}$ is preferably straight-chain. Preferable compounds of the formula (C-3) include

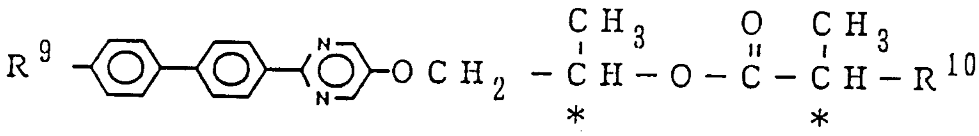

(C-3a)

and

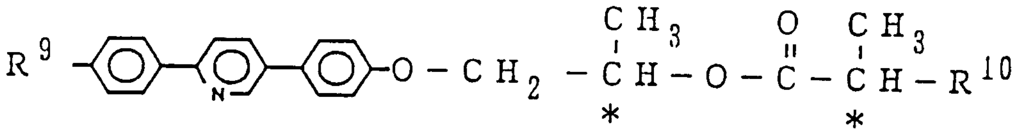

(C-3b)

Preferable exemplary compounds of the component C include

(a) a compound represented by the formula (C-1) in which the carbon number of $R^5$ is from 5 to 12, the carbon number of $R^6$ is from 2 to 9, and Z is F or CN (preferably F),

(b) a compound represented by the formula (C-2) in which the carbon number of $R^7$ is from 7 to 12, the carbon number of $R^8$ is from 2 to 6, and W is F or CN (preferably CN), and

(c) compounds represented by the formulae (C-3a) and (C-3b) in which $R^9$ is an alkyl group having 3 to 10 carbon atoms, and $R^{10}$ is an alkyl group having 2 to 8 carbon atoms or an alkoxy group having 1 to 18 carbon atoms (preferably the alkoxy group having 2 to 7 carbon atoms).

Typical examples of these compounds are set forth in Tables 5, 6, 7 and 8.

Table 5 Compounds (C-1) represented by

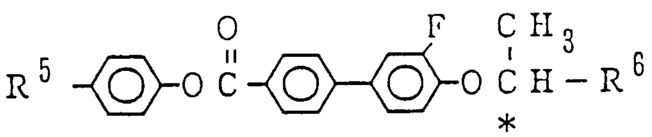

| $R^5$ | $R^6$ |
|---|---|
| $C_5H_{11}$- | $-C_6H_{13}$ |
| $C_6H_{13}$- | $-C_6H_{13}$ |
| $C_7H_{15}$- | $-C_6H_{13}$ |
| $C_8H_{17}$- | $-C_6H_{13}$ |
| $C_9H_{19}$- | $-C_6H_{13}$ |
| $C_{12}H_{25}$- | $-C_6H_{13}$ |

Table 6 Compounds (C-2) represented by

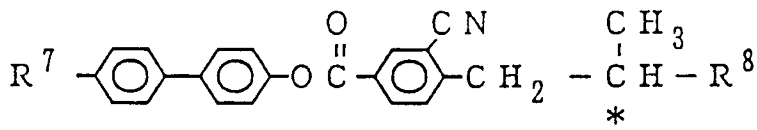

| $R^7$ | $R^8$ |
|---|---|
| $C_7H_{15}O-$ | $-C_2H_5$ |
| $C_8H_{17}O-$ | $-C_2H_5$ |
| $C_9H_{19}O-$ | $-C_2H_5$ |
| $C_{10}H_{21}O-$ | $-C_2H_5$ |
| $C_{11}H_{23}O-$ | $-C_2H_5$ |
| $C_{12}H_{25}O-$ | $-C_2H_5$ |

Table 7 Compounds (C-3a) represented by

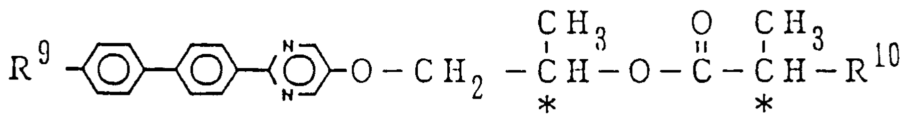

| $R^9$ | $R^{10}$ | $R^9$ | $R^{10}$ |
|---|---|---|---|
| $C_5H_{11}$- | $-C_2H_5$ | $C_6H_{13}$- | $-OC_5H_{11}$ |
| $C_5H_{11}$- | $-C_6H_{13}$ | $C_3H_7$- | $-OC_6H_{13}$ |
| $C_3H_7$- | $-OC_4H_9$ | $C_6H_{13}$- | $-OC_6H_{13}$ |
| $C_5H_{11}$- | $-OC_4H_9$ | $C_6H_{13}O$- | $-OC_4H_9$ |
| $C_6H_{13}$- | $-OC_4H_9$ | $C_6H_{13}O$- | $-OC_6H_{13}$ |
| $C_7H_{15}$- | $-OC_4H_9$ | | |

Table 8 Compounds (C-3b) represented by

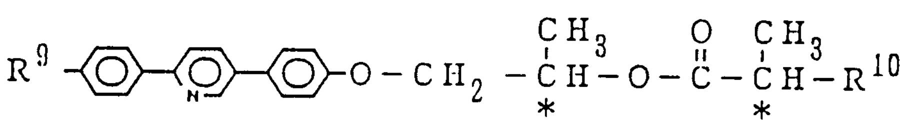

| $R^9$ | $R^{10}$ | $R^9$ | $R^{10}$ |
|---|---|---|---|
| $C_6H_{13}$- | $-C_2H_5$ | $C_6H_{13}$- | $-OC_3H_7$ |
| $C_7H_{15}$- | $-C_2H_5$ | $C_7H_{15}$- | $-OC_3H_7$ |
| $C_9H_{19}$- | $-C_2H_5$ | $C_9H_{19}$- | $-OC_3H_7$ |
| $C_5H_{11}$- | $-OC_3H_7$ | | |

The compound of the above-mentioned (a) is a compound mentioned in Japanese Patent Application Laid-open Nos. 61-43 and 61-210056, and it has high spontaneous polarization, cholesteric properties and negative dielectric anisotropy. For example, a compound represented by the formula

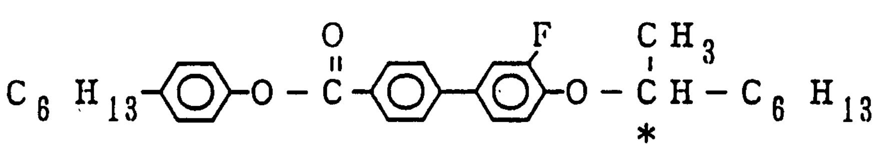

has a phase transition temperature of Cr31.5 $S_C$*62.1 N*74.2 $I_{SO}$, a spontaneous polarization value of 105 $nCcm^{-2}$ ($T-T_C$ = -10 °C), a response time of 31 μsec. ($T-T_C$ = -10 °C, E = 5 V/μm), and a dielectric

anisotropy Δϵ of -1.

The compound of the above-mentioned (b) is a compound mentioned in Japanese Patent Application No. 63-298156 which is a helical pitch modifier and has a negative dielectric anisotropy.

For example, a compound represented by the formula

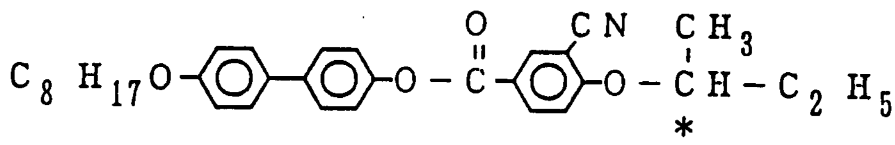

has a phase transition temperature of Cr47.5 $S_C$*85.0 $S_A$121.3 N*123.6 $I_{SO}$, a spontaneous polarization value of 23.6 $nCcm^{-2}$ (T-$T_C$ = -10 °C), a response time of 108 μsec. (T-$T_C$ = -10 °C, E = 5 V/μm), and a dielectric anisotropy Δϵ of -2.

The compound of the above-mentioned (c) is a compound mentioned in Japanese Patent Application No. 62-103977 which has high spontaneous polarization and contribute to the shortening of a response time. However, when this compound having a positive dielectric anisotropy is used in an excess amount, it is probable to make the dielectric anisotropy of the composition positive, and therefore it is preferred that the content of the compound is 15% by weight or less.

For example, as the compound of the formula C-3a, a compound represented by the formula

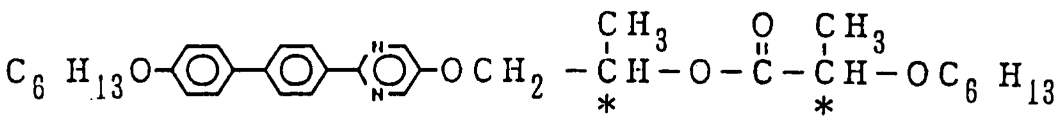

has a phase transition temperature of Cr67 $S_C$*96 N*107 $I_{SO}$, a spontaneous polarization value of 327 $nCcm^{-2}$ (T-$T_C$ = -10 °C), a response time of 45 μsec. (T-$T_C$ = -10 °C, E = 5 V/μm).

Furthermore, as the compound of the formula C-3b, a compound represented by the formula

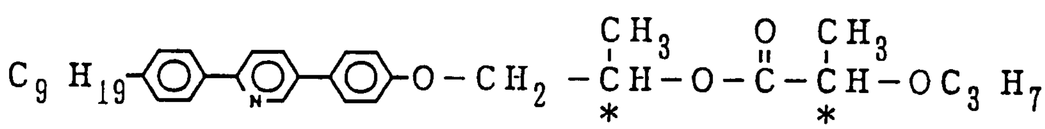

has a phase transition temperature of Cr70 $S_C$*103 $S_A$108 N*110 $I_{SO}$, a spontaneous polarization value of 243 $nCcm^{-2}$ (T-$T_C$ = -10 °C), a response time of 30 μsec. (T-$T_C$ = -10 °C, E = 5 V/μm).

With regard to the compounds represented by the formulae (C-3a) and (C-3b), in case that an absolute configulation in an optically active site is (S. S) or (S. R.), the polarity of spontaneous polarization is minus and the winding direction of a helix is counterclockwise (in case that the absolute configuration is (R. R) or (R. S), the polarity is plus and the winding direction is clockwise). Moreover, with regard to the compound represented by the formula (C-2), the polarity of the spontaneous polarization is the same as in the compounds represented by the formulae (C-3a) and (C-3b) (the spontaneous polarization is not offset), and the winding direction of the helix is converse. Therefore, if the compound represented by the formula (C-2) is combined with the compound represented by the formula (C-3a) or (C-3b), a helical pitch can be lengthened.

The amount of the component A in the composition of the present invention is from 10 to 25% by weight with respect to the total amount of the three components A, B and C. When the amount of the component A is less than 10% by weight, the upper limit of the $S_C$* phase excessively drops and Δϵ also decreases. When it is more than 25%, viscosity is too high, with the result that a response speed slows down, an N* phase disappears, and thus an alignment deteriorates.

The amount of the component B is from 45 to 65% by weight with respect to the total amount of the three components A, B and C. When the amount of the component B is less than 45% by weight, the contents of the components A and B relatively increase, so that viscosity excessively rises. When it is more than 65%, the upper limit of the $S_C$* phase drops, so that the N* phase scarcely appears and thus the alignment deteriorates.

The amount of the component C is from 10 to 30% by weight with respect to the total weight of the three components. When the amount of the component C is less than 10% by weight, the spontaneous polarization excessively declines, so that the response speed slows down. When it is more than 30% by weight, the spontaneous polarization excessively increases, and for this reason, it is difficult to exert an AC stabilizing effect. Accordingly, the response speed is more largely affected by a viscosity than by the spontaneous polarization, and so even if the spontaneous polarization increases, the response speed slows down.

Compound other than the three components A, B and C can also be added to the composition of the present invention so as to realize the phase transition series of $I_{SO} \rightarrow N^* \rightarrow S_A \rightarrow S_C^*$ and to further increase the negative dielectric anisotropy. The amount of the other compounds is less than 15% by weight, preferably from 2 to 7% by weight of the composition.

The compounds other than the components A, B and C can be represented by the formulae

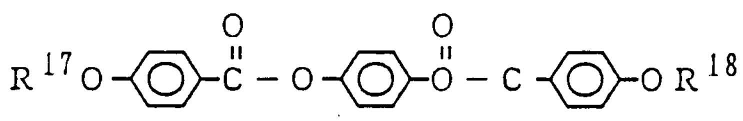

(D-1)

and

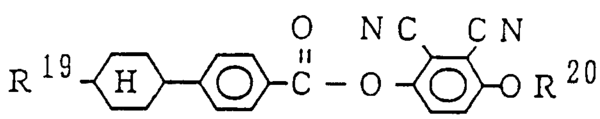

(D-2)

Typical examples of the other compounds are as follows:

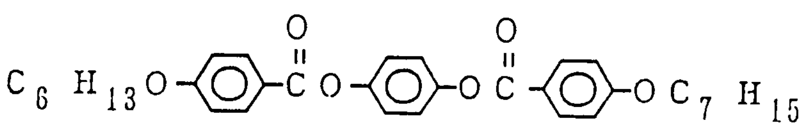

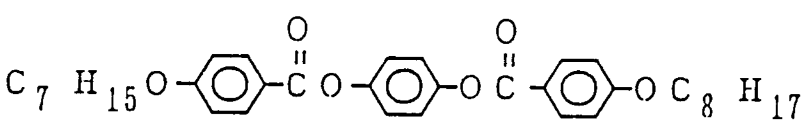

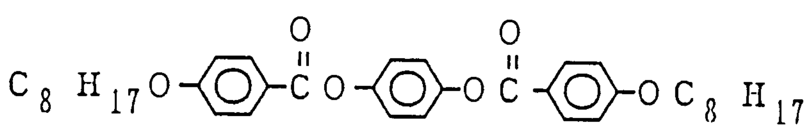

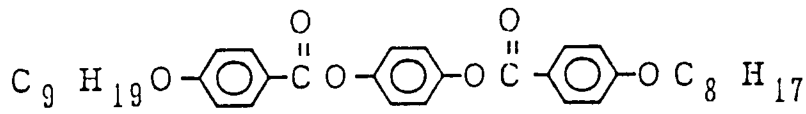

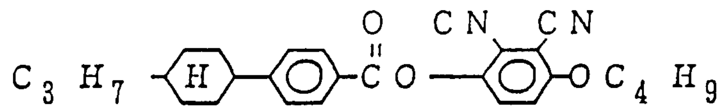

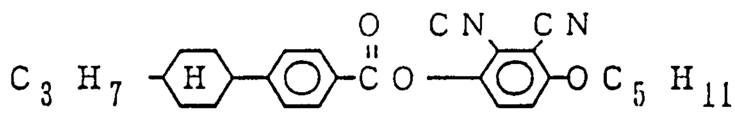

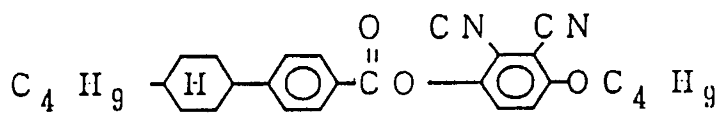

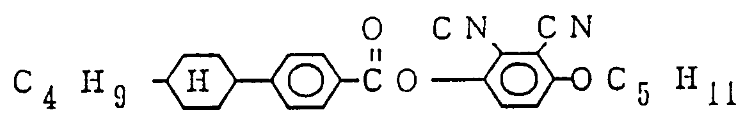

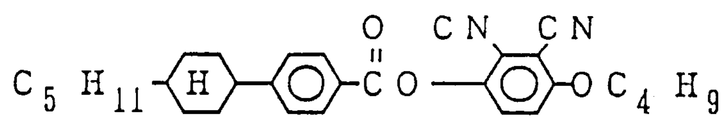

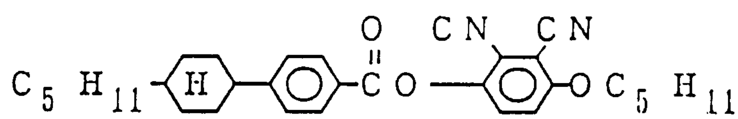

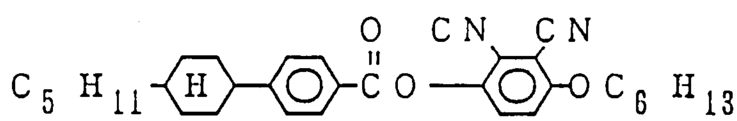

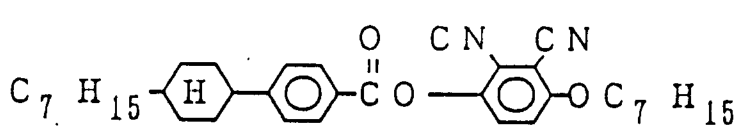

A liquid crystal composition of the present invention has a negative dielectric anisotropy, a good AC stabilizing effect and excellent temperature properties of a response time.

Furthermore, a light switching element made from the liquid crystal composition of the present invention has a high-speed response and can be applied to high multiplexes and liquid crystal displays.

EXAMPLES

Now, the present invention will be described in detail in reference to examples, but the present invention should not be limited to these examples. Various parameters in the examples were measured by the following procedures.

A spontaneous polarization value ($P_S$) was measured by a Sawyer-Tower method, and a tilt angle ($\theta$) was determined by first applying a sufficiently high electric field of a critical electric field or more to a homogeneously aligned cell to extinguish a helical structure, inverting a polarity, and measuring the moved angle of an extinction site (corresponding to $2\theta$) under crossed nicols.

A response time was determined by pouring each composition into an aligned cell having an electrode gap of 2 µm, and then measuring a change of the intensity of a transmitted light at the time when a rectangular waveform having a $V_{PP}$ of 20 V and 1 KHz was applied thereto.

An $S_C$* pitch was determined by directly determining a gap between strips (dechiralization lines) corresponding to helical pitches under a polarized light microscope by the use of a homogeneously aligned cell having a thickness of about 200 µm.

An N* pitch was indirectly determined by first measuring a gap ($\ell$) of line defects (disclination lines) under a polarized light microscope by the use of a wedge type cell, and then making a calculation in accordance with the theoretical formula of P (pitch) = $2\ell \tan\theta$ wherein $\theta$ was a tilt angle of the wedge type cell.

A dielectric anisotropy was calculated from a permittivity which was measured from a capacity in the case of an empty cell at 1 KHz and a capacity in the case of the cell into which liquid crystals were poured. The aforesaid cells were subjected to a parallel aligning treatment and a vertical aligning treatment prior to the use.

Example 1

A composition comprising the following components was prepared.

As a component A,

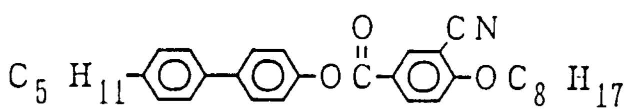 3.6% by weight

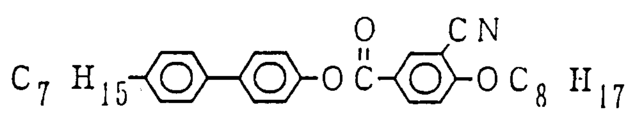 5.6% by weight

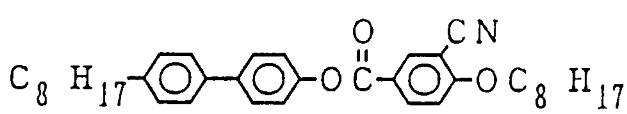 5.0% by weight

As a component B,

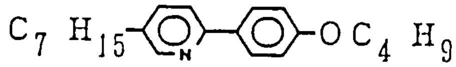

8.5 by weight

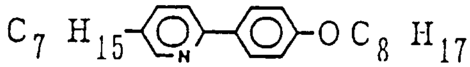

8.5% by weight

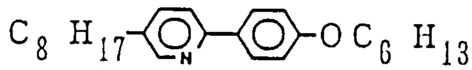

8.5% by weight

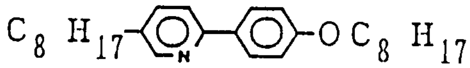

8.5% by weight

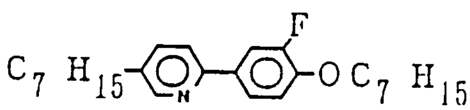

22.7% by weight

As a component C,

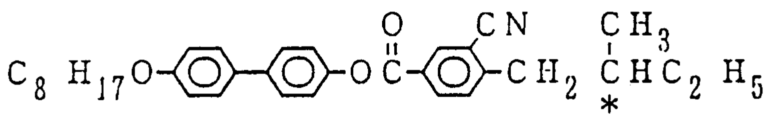

10% by weight

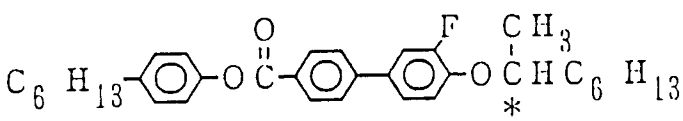

10% by weight

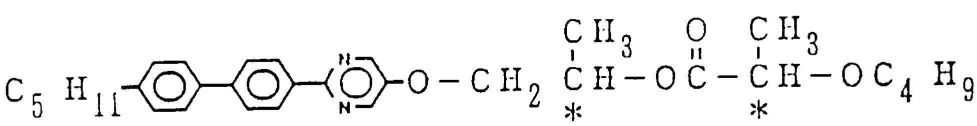

3% by weight

As another component,

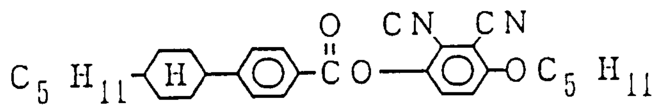 3.8% by weight

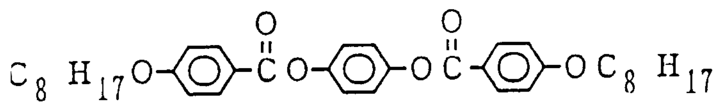 2.3% by weight

The phase transition temperature of this composition C was Cr-34 $S_C$*66 $S_A$73 N*79 $I_{SO}$. At 25 °C, a spontaneous polarization value was 17 $nCcm^{-2}$, a tilt angle was 28°, a response time was 269 μsec. (E = 5V/μm), and a dielectric anisotropy $\Delta\epsilon$ was -4. At 40 °C, the response time was 107 μsec. and $\tau_{25°C}/\tau_{40°C}$ = 2.52 ($\tau_{25°C}$ and $\tau_{40°C}$ were response times at 25 °C and 40 °C, respectively).

Comparative Example 1

A ferroelectric liquid crystal composition comprising the following components was prepared (this composition was a composition disclosed in Japanese Patent Application No. 62-328717).

As a component B,

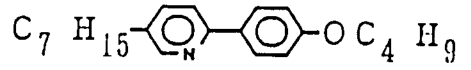 4.4% by weight

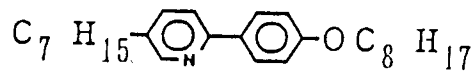 4.4% by weight

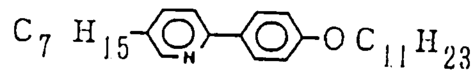 4.4% by weight

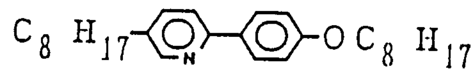 4.4% by weight

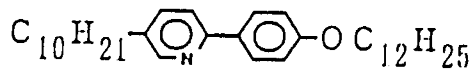 4.4% by weight

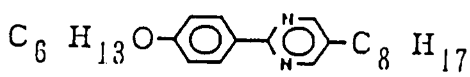 4.4% by weight

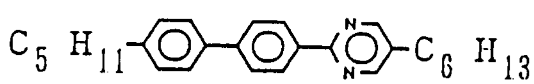 4.4% by weight

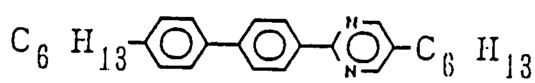 4.4% by weight

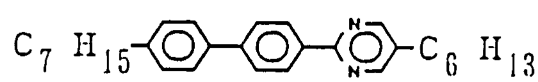 4.4% by weight

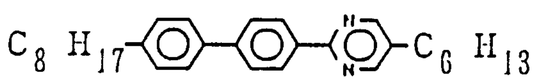 4.4% by weight

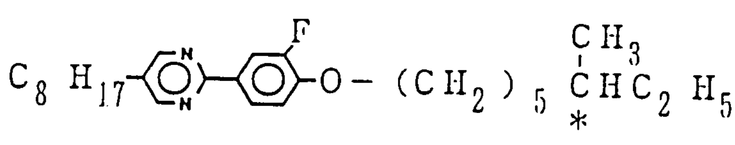 8% by weight

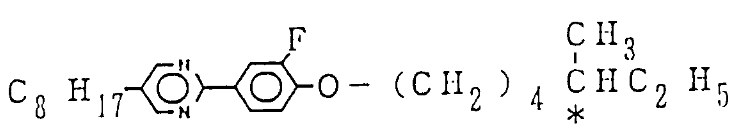 4% by weight

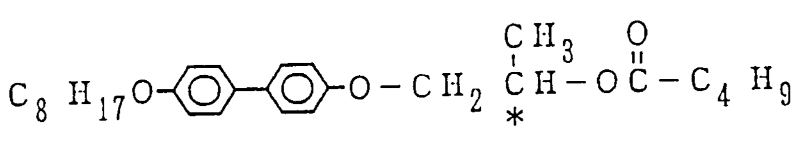 8% by weight

As a component C,

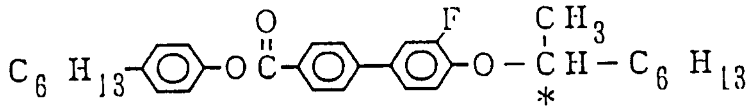 8% by weight

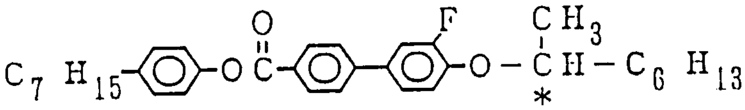 4% by weight

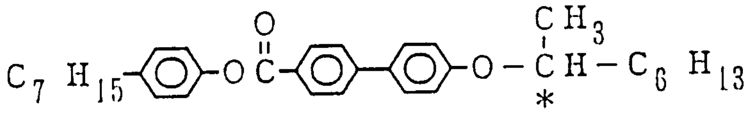 4% by weight

As a component other than in the composition of the present invention

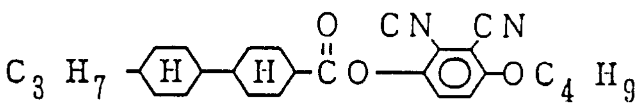 5% by weight

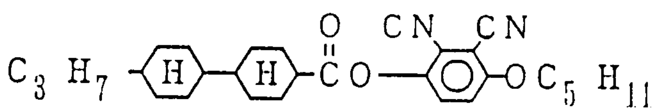 5% by weight

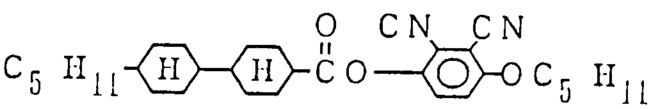 5% by weight

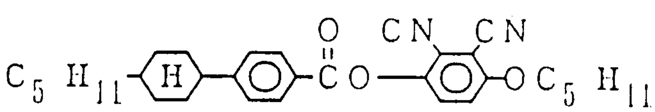 5% by weight

The phase transition temperature of this composition d was Cr-38 $S_C$*64 $S_A$69 N*81 $I_{SO}$. At 25 °C, a spontaneous polarization value was 16 $nCcm^{-2}$, a tilt angle was 25 °, a response time was 340 µsec. (E = 5V/µm), and a dielectric anisotropy $\Delta\epsilon$ was -4. At 40 °C, the response time was 119 µsec. and $\tau_{25°C}/\tau_{40°C}$ = 2.85.

Fig. 1 shows temperature changes of the response times of the composition obtained in Example 1 and the composition obtained in Comparative Example 1. When the composition of Example 1 is compared with the composition of Comparative Example 1, they are substantially identical in the spontaneous polarization and the dielectric anisotropy, but the composition C has the short response time and is excellent in the temperature properties of the response time. Furthermore, the composition of the present invention contains the components B and C, which are essential components of the composition of the present invention, as well as 20% by weight of a compound having the group of

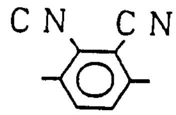

such as

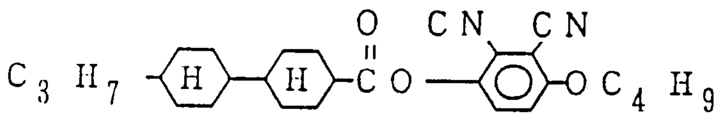

for increasing the dielectric anisotropy as a component other than the components A, B and C, and these compounds heighten a viscosity and thus render the response time slow.

As is apparent from the foregoing, when the three components A, B and C constituting the composition of the present invention are combined, the ferroelectric liquid crystal composition having a negative dielectric anisotropy can be obtained which shows an $S_C$* phase in a wide temperature range inclusive of room temperature and which has a high-speed response and the excellent temperature properties of the response time.

Example 2

A composition comprising the following components was prepared.

As a component A,

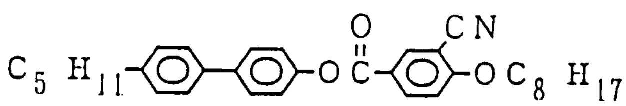 3.5% by weight

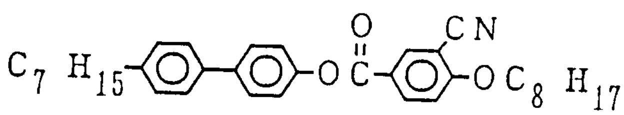 5.5% by weight

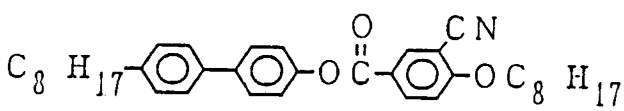 4.9% by weight

As a component B,

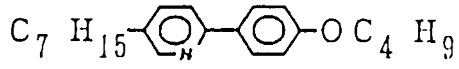

8.3% by weight

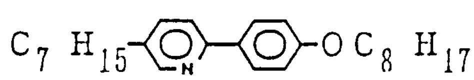

8.3% by weight

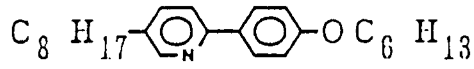

8.3% by weight

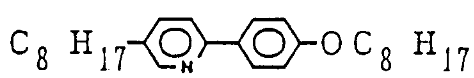

8.3% by weight

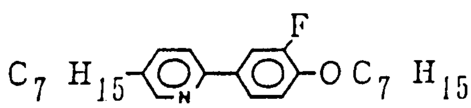

22.2% by weight

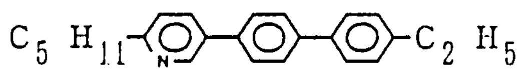

7.7% by weight

As a component C,

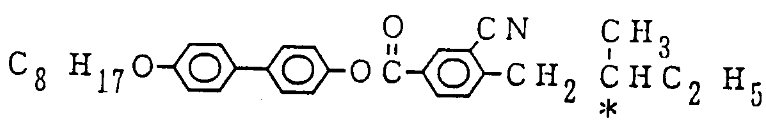

10% by weight

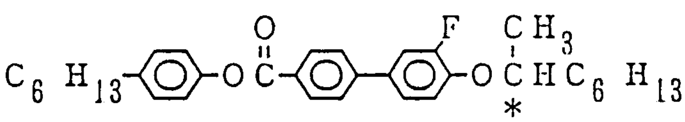

10% by weight

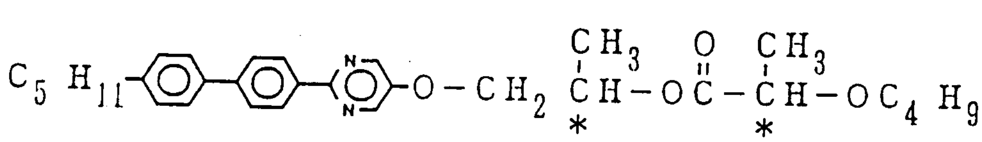

3% by weight

The phase transition temperature of this composition was Cr-29 $S_C$*69 $S_A$79 N*82 $I_{SO}$. At 25°C, a spontaneous polarization was 17 $nCcm^{-2}$, a tilt angle was 26°, a response time was 257 μsec. (E = 5V/μm), and a dielectric anisotropy $\Delta\epsilon$ was -2. At 40°C, the response time was 100 μsec. and $\tau_{25°C}/\tau_{40°C}$ = 2.57. These results indicate that the prepared ferroelectric liquid crystal composition having a negative dielectric anisotropy has an $S_C$* phase in a wide temperature range inclusive of room temperature, a high-speed response and the excellent temperature properties of the response time.

Example 3

A composition comprising the following components was prepared.
As a component A,

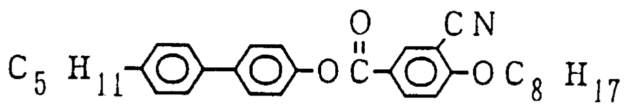 3.4% by weight

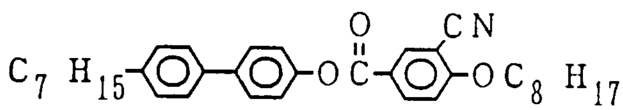 5.3% by weight

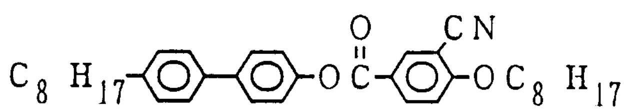 4.7% by weight

As a component B,

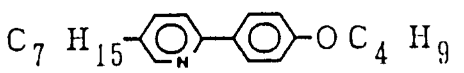 10.8% by weight

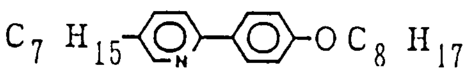 10.8% by weight

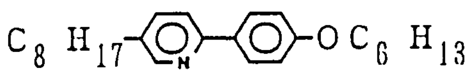 10.8% by weight

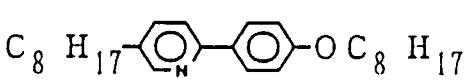 10.7% by weight

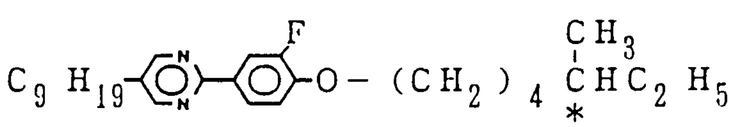 8.8% by weight

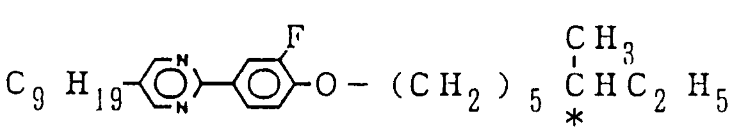 8.8% by weight

As a component C,

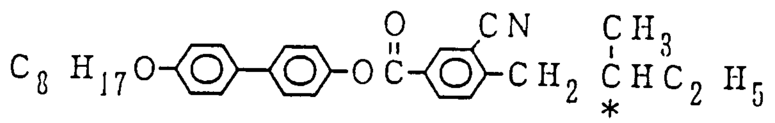 10% by weight

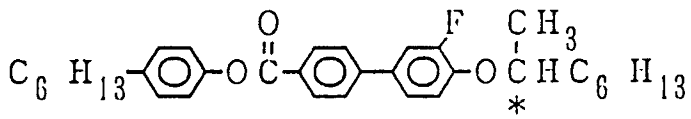 5% by weight

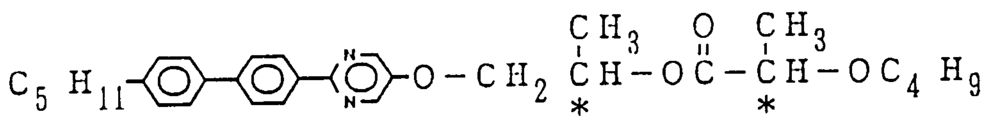

5% by weight

As another component,

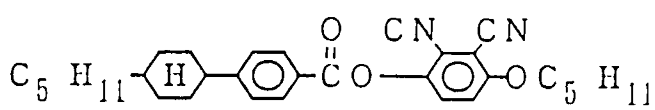 3.7% by weight

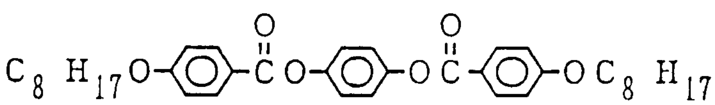 2.2% by weight

The phase transition temperature of this composition was Cr-37 $S_C$*65 $S_A$73 N*76 $I_{SO}$. At 25 °C, a dielectric anisotropy $\Delta\epsilon$ was -2, a spontaneous polarization value was 18 $nCcm^{-2}$, a tilt angle was 25°, and a response time was 207 $\mu$sec. (E = 5V/$\mu$m). At 40 °C, the response time was 80 $\mu$sec. and $\tau_{25°C}/\tau_{40°C}$ = 2.40. These results indicate that the prepared composition has an $S_C$* phase in a wide temperature range inclusive of room temperature, a high-speed response and the excellent temperature properties of the response time.

<u>Example 4</u>

A composition comprising the following components was prepared in accordance with the present invention.

As a component A,

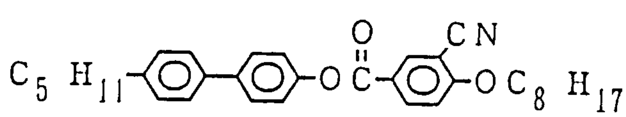 4.2% by weight

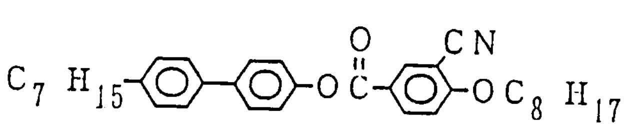 6.8% by weight

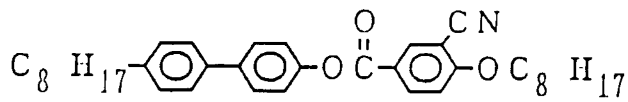 6.0% by weight

As a component B,

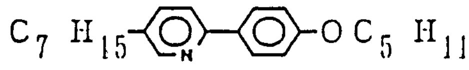 11.2% by weight

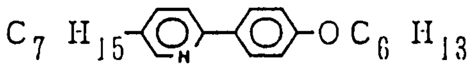 8.5% by weight

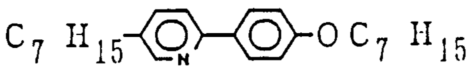 11.6% by weight

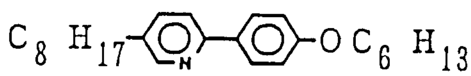 1.5% by weight

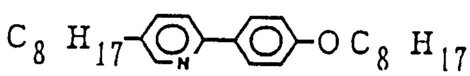 5.8% by weight

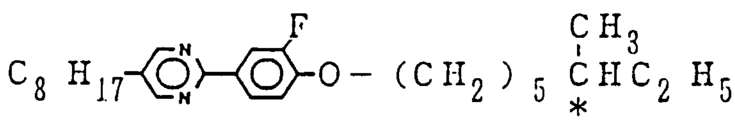

16.4% by weight

As a component C,

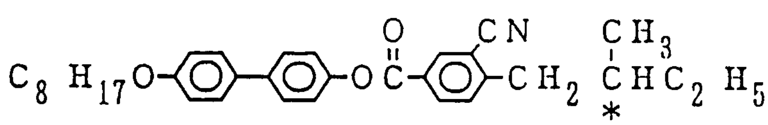 8% by weight

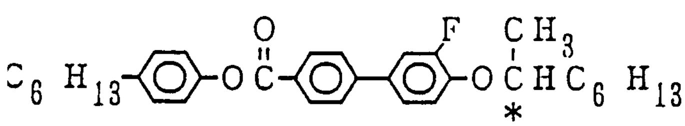 4% by weight

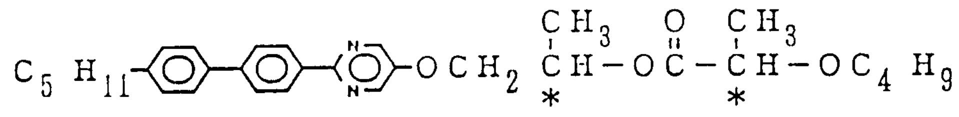

3% by weight

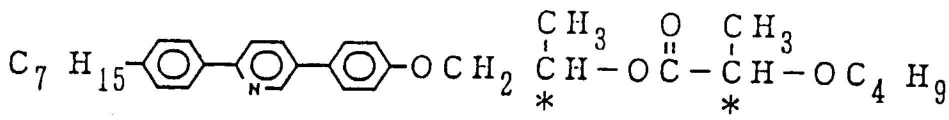

2% by weight

As another component,

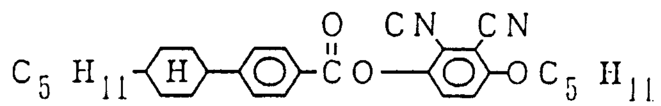

6% by weight

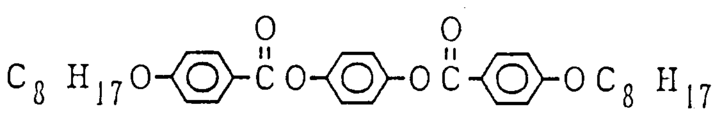

5% by weight

The phase transition temperature of this composition was Cr-35 $S_C$*66 $S_A$71 N*80 $I_{SO}$. At 25°C, a dielectric anisotropy $\Delta\epsilon$ was -3, a spontaneous polarization value was 18 $nCcm^{-2}$, a tilt angle was 26°, a response time was 294 μsec. (E = 5V/μm). At 40°C, the response time was 125 μsec., $\tau_{25°C}/\tau_{40°C}$ = 2.35, and an N* phase pitch was long, 17 μm (72°C). These results indicate that the prepared composition has an $S_C$* phase in a wide temperature range inclusive of room temperature, the long N* phase pitch, an excellent alignment, a high-speed response and the excellent temperature properties of the response time.

Example 5

The ferroelectric liquid crystal composition in Example 4 was poured into a cell which was coated with an aligning agent of a polyimide and then rubbed on the surface thereof to carry out a parallel aligning treatment and which was equipped with a pair of transparent electrodes having a cell gap of 5 μm. This liquid crystal cell was then put between two light polarizers disposed in the state of crossed nicols, and an AC waveform of 20 KHz and 20 V was superposed upon a pulse waveform having a pulse duration of 400 μsec and a peak value of 25 V shown in Fig. 2, so that a good AC stabilizing effect which was exhibited in Fig. 3 was observed. An obtained liquid display element had good memory properties and a very excellent contrast ratio of 1:20.

Example 6

The ferroelectric liquid crystal composition in Example 3 was poured into a cell which was coated with an aligning agent of a polyimide and then rubbed on the surface thereof to carry out a parallel aligning treatment and which was equipped with a pair of transparent electrodes having a cell gap of 2 μm. This liquid crystal cell was then put between two light polarizers disposed in the state of crossed nicols, and an AC waveform of 20 KHz and 8 V was superposed upon a pulse waveform having a pulse duration of 400 μsec and a peak value of 10 V shown in Fig. 2, so that a good AC stabilizing effect which was exhibited in Fig. 3 was observed. An obtained liquid display element had good memory properties and a very excellent contrast ratio of 1:20.

## Claims

1. A ferroelectric liquid crystal composition having a negative dielectric anisotropy and comprising 85% by weight or more of three components A, B, and C, the amounts of each of components A, B and C, relative to the total weight of the three components, being 10-25% by weight, 45-65% by weight and 10-30% by weight, respectively; component A being composed of one or more compounds of the formula

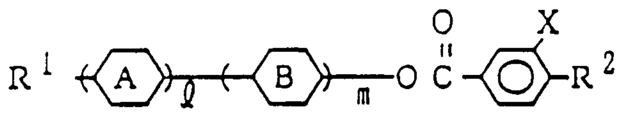

(A)

component B being composed of one or more compounds of the formula

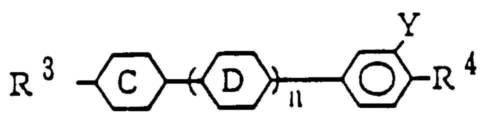

; (B)

and component C being composed of one or more compounds of the formulae

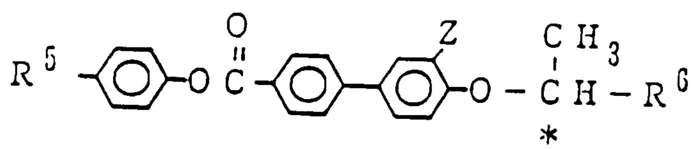

(C-1)

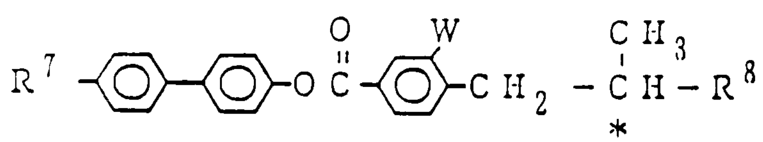

(C-2)

and

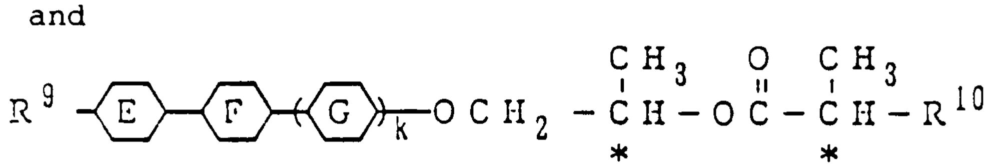

(C-3)

in which $R^1$ and $R^2$ are the same or/and different and each is a straight-chain alkyl or alkoxy group having 1 to 18 carbon atoms; $R^3$, $R^4$, $R^5$, $R^7$ and $R^9$ are the same or are different and each is a straight-chain or branched alkyl or alkoxy group having 1 to 18 carbon atoms; each of $R^6$ and $R^8$ is a straight-chain or branched alkyl group having 2 to 18 carbon atoms: $R^{10}$ is a straight-chain or branched alkyl group having 2 to 18 carbon atoms or a straight-chain or branched alkoxy group having 1 to 18 carbon atoms; each of $\ell$, m, n and k is 0 or 1, and $\ell$ + m is 1 or 2: each of

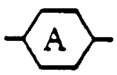, 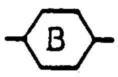, 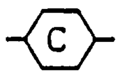, 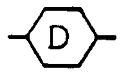, 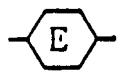, 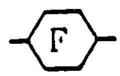 and 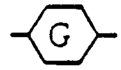

is independently

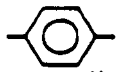, 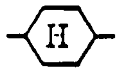, 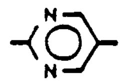, 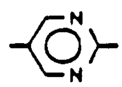, 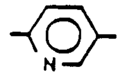, 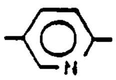, 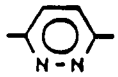 or 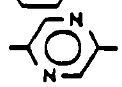;

each of X, Y, Z and W is F, Cl, Br or CN and Y may also be H, and * indicates an asymmetric carbon atom.

2. A composition according to Claim 1 in which component A is composed of one or more compounds of the formula

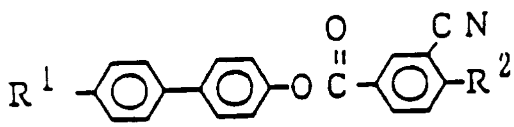 (A − 1)

(in which $R^1$ and $R^2$ have the meanings defined in claim 1).

3. A composition according to claim 1 or claim 2 wherein component B is composed of one or more compounds of the formulae

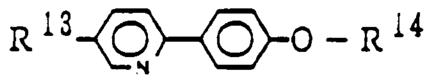

(B-1)

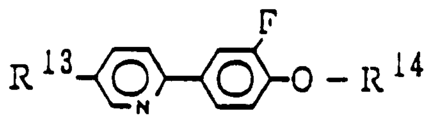

(B-2)

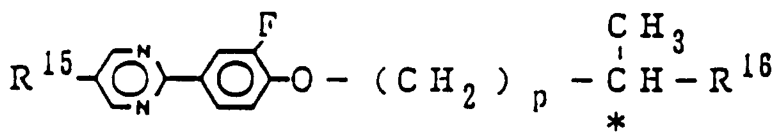

(B-3)

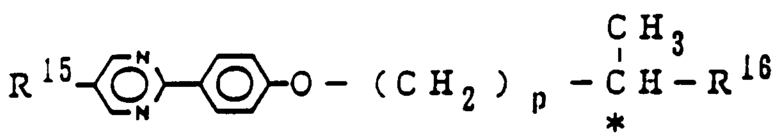

(B-4)

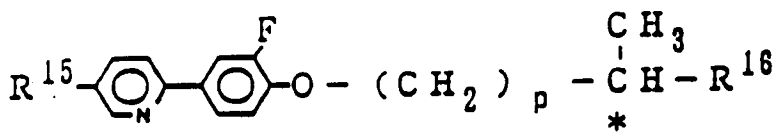

(B-5)

and 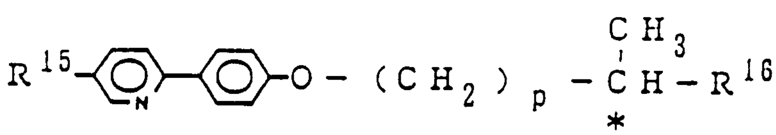

(B-6)

in which $R^{13}$ and $R^{14}$ are the same or/and different and each is a straight-chain alkyl group having 1 to 18 carbon atoms: $R^{15}$ is a straight-chain alkyl or alkoxy group having 1 to 18 carbon atoms: $R^{16}$ is an alkyl group having 2 to (16-p) carbon atoms: p is an integer of from 0 to 10, and * indicates an asymmetric carbon atom.

**4.** A composition according to any one of the preceding claims in which the compound of formula (C-3) comprising one or more compounds of the formulae

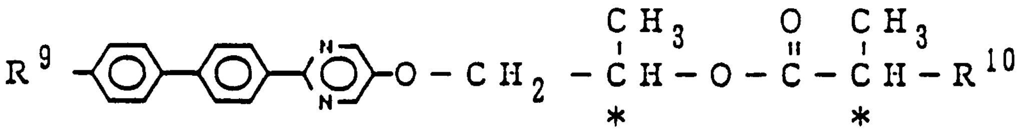

(C-3a)

and

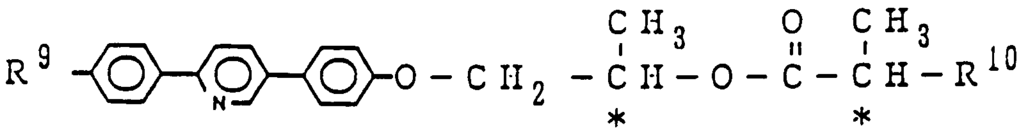

(C-3b)

(in which $R^9$ and $R^{10}$ have the meanings defined in claim 1).

5. A composition according to any one of the preceding claims also containing less than 15% by weight of one or more compounds of the formulae

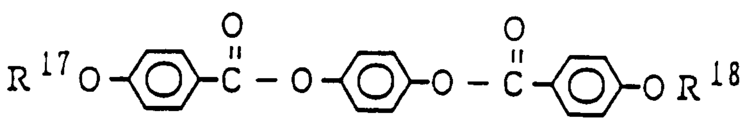

(D-1)

and

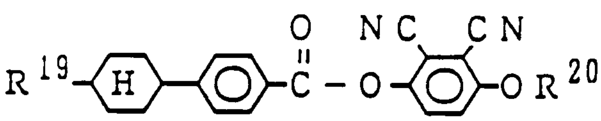

(D-2)

In which $R^{17}$, $R^{18}$, $R^{19}$ and $R^{20}$ are the same or/and different and each is an alkyl group having 3 to 15 carbon atoms.

6. A light switching element containing a ferroelectric liquid crystal as claimed in any one of the preceding claims.

**Patentansprüche**

1. Ferroelektrische Flüssigkristallzusammensetzung mit negativer dielektrischer Anisotropie und umfassend drei Komponenten A, B und C mit 85 Gewichtsprozent oder mehr, wobei die Menge jeder der drei Komponenten A, B und C in Bezug auf die Gesamtmasse der drei Komponenten 10 bis 25 Gewichtsprozent. 45 bis 65 Gewichtsprozent bzw. 10 bis 30 Gewichtsprozent beträgt und worin sind:
Komponente A, bestehend aus einer oder mehreren Verbindungen der Formel:

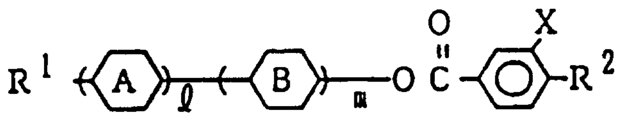 (A)

Komponente B. bestehend aus einer oder mehreren Verbindungen der Formel:

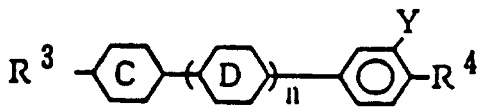 (B)

und
Komponente C, bestehend aus einer oder mehreren Verbindungen der Formein:

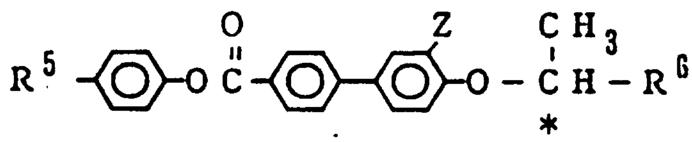 (C-1)

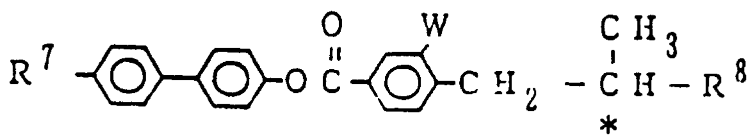 (C-2)

und

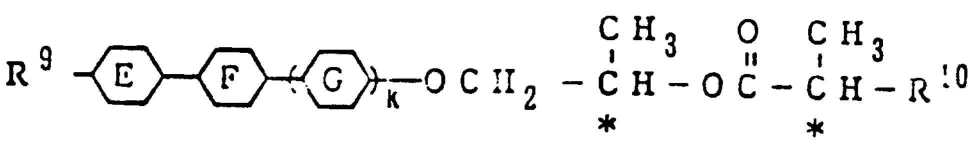 (C-3)

darin sind:
$R^1$ und $R^2$ gleich oder/und verschieden und jedes eine geradkettige Alkyl- oder Alkoxygruppe mit 1 bis 18 Kohlenstoffatomen; $R^3$, $R^4$, $R^5$, $R^7$ und $R^9$ gleich oder verschieden und jedes eine geradkettige oder verzweigte Alkyl- oder Alkoxygruppe mit 1 bis 18 Kohlenstoffatomen; jedes von $R^6$ und $R^8$ eine geradkettige oder verzweigte Alkylgruppe mit 2 bis 18 Kohlenstoffatomen; $R^{10}$ eine geradkettige oder verzweigte Alkylgruppe mit 2 bis 18 Kohlenstoffatomen oder eine geradkettige oder verzweigte Alkoxygruppe mit 1 bis 18 Kohlenstoffatomen; jedes der l, m, n und k Null oder 1, und l+m gleich 1 oder 2; jede der

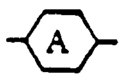, 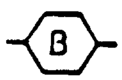, 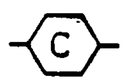, 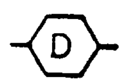, 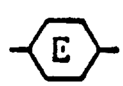, 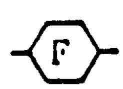 und 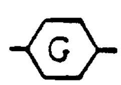.

unabhängig

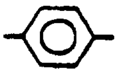 , 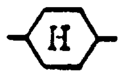 , 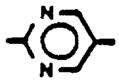 , 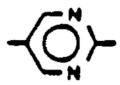 , 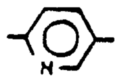 , 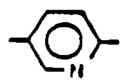 , 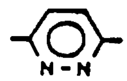 oder

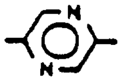 ;

jedes der X, Y, Z und W ist F, Cl, Br oder CN, wobei Y auch H sein kann, und das Zeichen * kennzeichnet ein asymmetrisches Kohlenstoffatom.

**2.** Zusammensetzung nach Anspruch 1, worin Komponente A aus einer oder mehreren Verbindungen der Formel

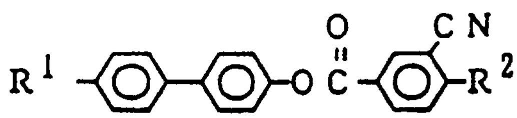 (A-1)

besteht (worin $R^1$ und $R^2$ die in Anspruch 1 festgelegten Bedeutungen haben).

**3.** Zusammensetzung nach Anspruch 1 oder 2, worin Komponente B aus einer oder mehreren Verbindungen der Formeln

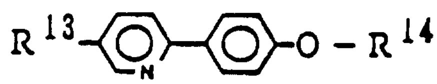 (B-1)

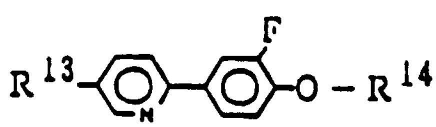 (B-2)

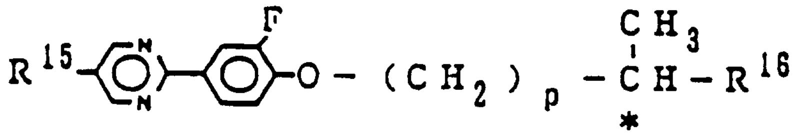

(B-3)

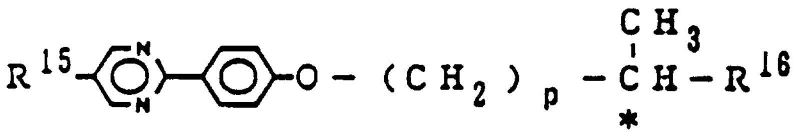

(B-4)

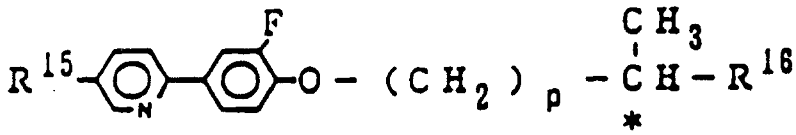

(B-5)

und

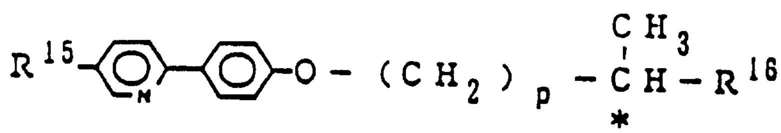

(B-6)

besteht und worin $R^{13}$ und $R^{14}$ gleich oder/und verschieden sind und jedes eine geradkettige Alkylgruppe mit 1 bis 18 Kohlenstoffatomen ist, $R^{15}$ ist eine geradkettige Alkyl- oder Alkoxygruppe mit 1 bis 18 Kohlenstoffatomen; $R^{16}$ eine Alkylgruppe mit 2 bis (16-p) Kohlenstoffatomen; p ist eine ganze Zahl von Null bis 10, und das Zeichen * kennzeichnet ein asymmetrisches Kohlenstoffatom.

**4.** Zusammensetzung nach einem der vorhergehenden Ansprüche, bei welcher die Verbindung der Formel (C-3) eine oder mehrere Verbindungen der Formeln

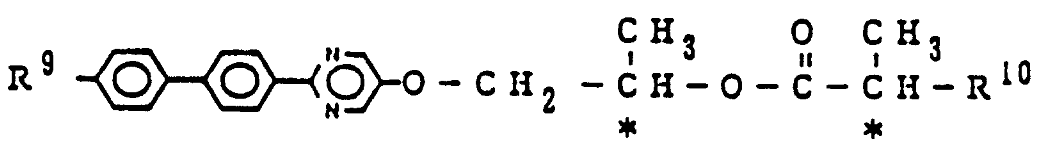

(C-3a)

und

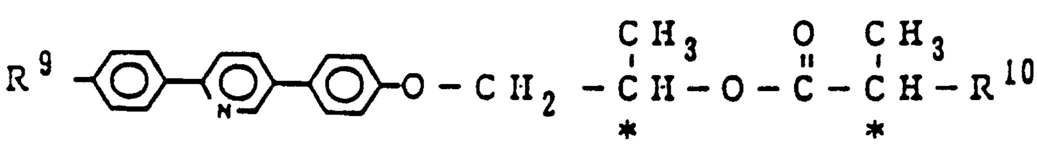

(C-3b)

umfaßt (worin $R^9$ und $R^{10}$ die in Anspruch 1 festgelegten Bedeutungen haben).

**5.** Zusammensetzung nach einem der vorhergehenden Ansprüche, ebenfalls enthaltend weniger als 15 Gewichtsprozent einer oder mehrerer Verbindungen der Formeln

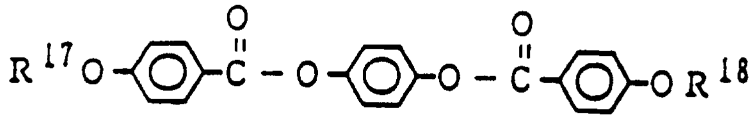

(D-1)

et

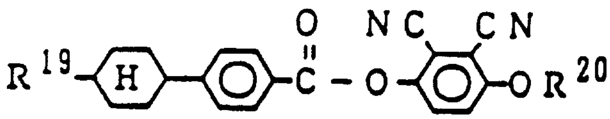

(D-2)

worin $R^{17}$, $R^{18}$, $R^{19}$ und $R^{20}$ gleich oder/und verschieden sind und jedes eine Alkylgruppe mit 3 bis 15 Kohlenstoffatome ist.

**6.** Element zum Lichtschalten, enthaltend einen ferroelektrischen Flüssigkristall nach einem der vorhergehenden Ansprüche.

## Revendications

**1.** Composition liquide cristalline ferroélectrique présentant une anisotropie diélectrique négative et comprenant 85% en poids ou plus de 85% en poids de trois composants A, B et C, la quantité de chaque composant A, B et C par rapport au poids total des trois composants étant respectivement de 10 à 25% en poids, de 45 à 65% en poids et de 10 à 30% en poids, le composant A étant composé de un ou plusieurs composés de la formule

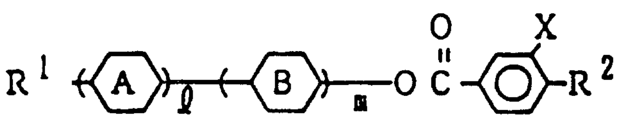

(A)

le composant B étant composé de un ou plusieurs composés de la formule

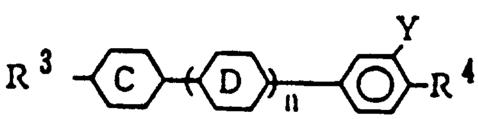

(B)

et le composant C étant composé de un ou plusieurs composés des formules

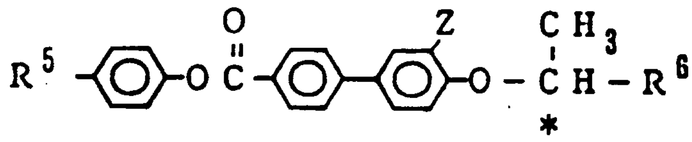 (C-1)

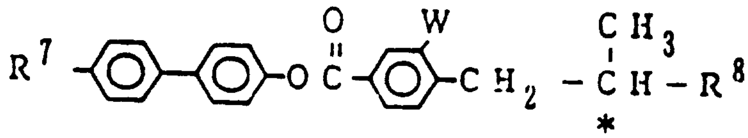 (C-2)

et

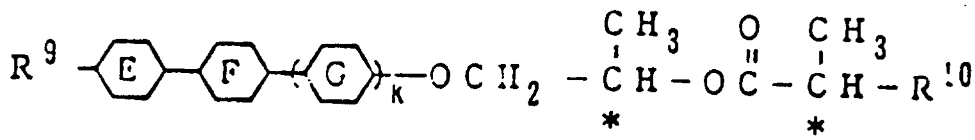 (C-3)

dans lesquelles $R^1$ et $R^2$ sont identiques ou/et différents et sont chacun un groupe alkyle ou alcoxy à chaîne linéaire ayant de 1 à 18 atomes de carbone; $R^3$, $R^4$, $R^5$, $R^7$ et $R^9$ sont identiques ou différents et sont chacun un groupe alkyle ou alcoxy à chaîne linéaire ou ramifiée ayant de 1 à 18 atomes de carbone; chacun des $R^6$ et $R^8$ est un groupe alkyle à chaîne linéaire ou ramifiée ayant de 2 à 18 atomes de carbone; $R^{10}$ est un groupe alkyle à chaîne linéaire ou ramifiée ayant de 2 à 18 atomes de carbone ou un groupe alcoxy à chaîne linéaire ou ramifiée ayant de 1 à 18 atomes de carbone; chacun des l, m, n et k est 0 ou 1, et l + m est 1 ou 2; chacun des

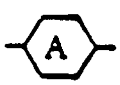, 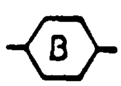, 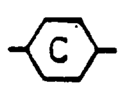, 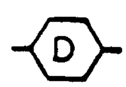, 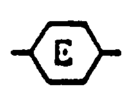, 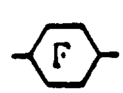 et 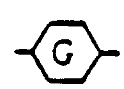,

est indépendamment des autres

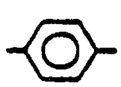, 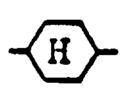, 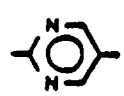, 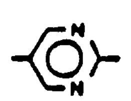, 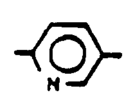,

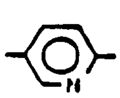, 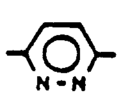 ou 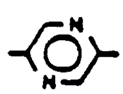;

chacun des X, Y, Z et W est F, Cl, Br ou CN, et Y peut également être H, et * indique un atome de carbone asymétrique.

**2.** Composition selon la Revendication 1, dans laquelle le composant A est composé de un ou plusieurs composés de la formule

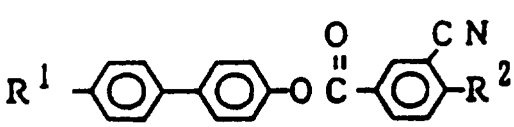 (A-1)

(dans laquelle $R^1$ et $R^2$ ont les significations qui leur sont données dans la revendication 1).

**3.** Composition selon la revendication 1 ou la revendication 2, dans laquelle le composant B est composé de un ou plusieurs composés des formules

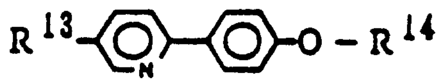 (B-1)

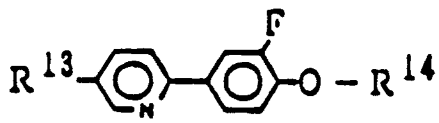 (B-2)

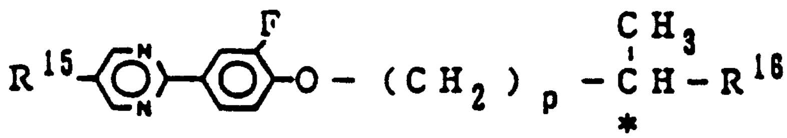 (B-3)

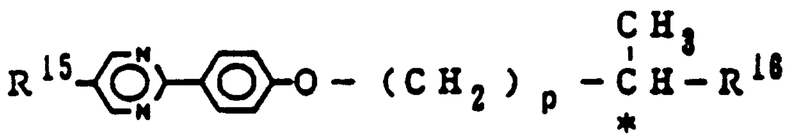 (B-4)

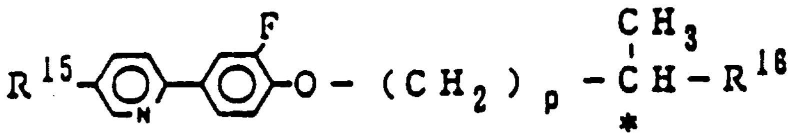 (B-5)

et 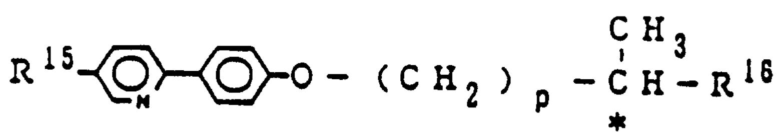 (B-6)

dans lesquelles $R^{13}$ et $R^{14}$ sont identiques ou/et différents et sont chacun un groupe alkyle à chaîne linéaire ayant de 1 à 18 atomes de carbone; $R^{15}$ est un groupe alkyle ou alcoxy à chaîne linéaire ayant de 1 à 18 atomes de carbone; $R^{16}$ est un groupe alkyle ayant de 2 à (16-p) atomes de carbone; p est un nombre entier de 0 à 10 et * indique un atome de carbone asymétrique.

**4.** Composition selon l'une quelconque des revendications précédentes, dans laquelle le composé de formule (C-3) comprend un ou plusieurs composés des formules

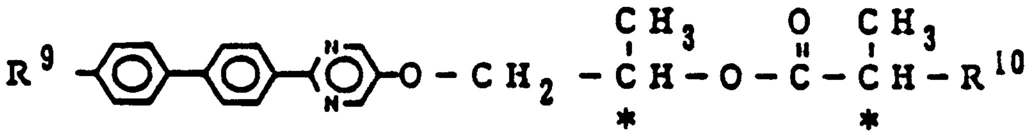 (C-3a)

et

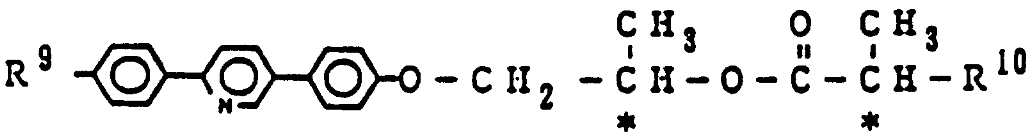 (C-3b)

(dans lesquelles $R^9$ et $R^{10}$ ont les significations qui leur sont données dans la revendication 1).

**5.** Composition selon l'une quelconque des revendications précédentes contenant, en outre, moins de 15% en poids de un ou plusieurs composés des formules

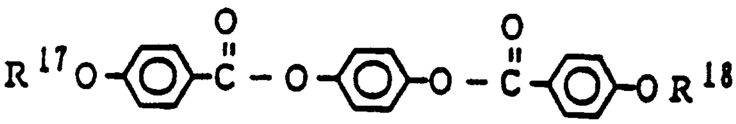 (D-1)

et

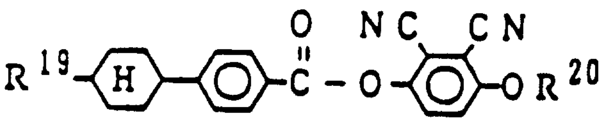 (D-2)

dans lesquelles $R^{17}$, $R^{18}$, $R^{19}$ et $R^{20}$ sont identiques ou/et différents et sont chacun un groupe alkyle ayant de 3 à 15 atomes de carbone.

**6.** Elément de commutation de la lumière contenant un liquide cristallin ferroélectrique tel que revendiqué dans l'une quelconque des revendications précédentes.